# FASCICULE DE BREVET EUROPEEN

(11) **EP 1 628 983 B1**
(45) Date de publication et mention de la délivrance du brevet: **06.02.2008**
(21) Numéro de dépôt: 04742614.3
(22) Date de dépôt: 30.04.2004
(51) Int. Cl.: C07F 7/16

(54) **PROCEDE D AGGLOMERATION DE LA MASSE USEE OU DES FINES ISSUES DE LA PRODUCTION D' ORGANOHALOSILANES**
VERFAHREN ZUR AGGLOMERISIERUNG VON GEBRAUCHTEM MATERIAL BZW. FEINANTEILEN AUS DER PRODUKTION VON ORGANOHALOGENSILANEN
METHOD FOR THE AGGLOMERATION OF USED MATERIAL OR FINES FROM THE PRODUCTION OF ORGANOHALOSILANES

(30) Priorité: 21.05.2003 FR 0306099
(43) Date de publication de la demande: 01.03.2006
(73) Titulaire: Bluestar Silicones France, 69486 Lyon Cedex 03 (FR)
(72) Inventeur: SIMON, Gérard, F-69004 Lyon (FR)
(86) Numéro de dépôt international: PCT/FR2004/001048
(87) Numéro de publication internationale: WO 2004/104012

(56) Documents cités:
- EP-A- 0 201 199
- EP-A- 0 287 934
- US-A- 5 342 430

## Description

La présente invention est relative à un procédé d'agglomération permettant la désactivation et la valorisation des masses usées pulvérulentes et/ou des fines résiduelles pulvérulentes issues de la production d'organohalosilanes, et plus particulièrement de la production des méthylchlorosilanes, par synthèse directe. L'invention est également relative aux produits issus de ce procédé d'agglomération ainsi qu'à l'utilisation de ces produits pour la valorisation notamment du silicium métal résiduel et de métaux tels que le cuivre.

La mise en oeuvre industrielle du procédé de synthèse directe des méthylchlorosilanes suivant la réaction de Rochow (réaction du silicium métal avec le chlorure de méthyle gazeux en présence de catalyseur à base de cuivre) est généralement réalisée en lit fluidisé. Le procédé nécessite une vidange régulière ou une purge du lit fluidisé, conduisant à ce qu'il est convenu d'appeler les masses usées et les fines résiduelles de synthèse. Ces masses usées et/ou fines résiduelles sont pulvérulentes et contiennent au côté du silicium métal, éventuellement des oxydes de silicium et des éléments tels que du chlore, de l'hydrogène, de l'oxygène ainsi que des éléments tels que cuivre, carbone, fer, aluminium, zinc, calcium, étain, manganèse, etc. Ces masses usées et ces fines pulvérulentes présentent un caractère très réactif qui rend leur manipulation et leur transport en l'état très difficile, voire impossible. En particulier, elles réagissent avec l'eau sous forme liquide ou vapeur, avec dégagement d'hydrogène et présentent un caractère auto-échauffant au contact de l'air. Les masses usées doivent pour cette raison être soumises à un traitement de désactivation.

Par ailleurs, les masses usées et les fines contiennent des proportions importantes de constituants tels que le silicium et le cuivre qu'il serait intéressant de pouvoir récupérer.

Le brevet US-A-5 342 430 décrit un procédé de désactivation dans lequel on fait réagir la masse usée avec un milieu aqueux comprenant de l'eau et un tensioactif, éventuellement à température élevée, puis l'on introduit un liant tel qu'un lignosulfonate, de la montmorillonite ou de la bentonite, ce traitement pouvant être suivi d'une élimination d'eau.

EP-A-0 287 934 décrit un procédé en deux étapes, comprenant d'abord l'agglomération de la masse usée (formation de pellets), puis l'imprégnation de cet agglomérat avec un liant organique. Le liant organique est appliqué de façon à imprégner l'agglomérat au moment de l'agglomération ou après cette dernière. Le liant peut être un liant organique liquide ayant une viscosité suffisamment basse pour assurer sa pénétration dans l'agglomérat, ou bien il peut être appliqué en solution ou en émulsion aqueuse. Le liant organique est présenté comme pénétrant l'agglomérat et augmentant sa cohésion. Les liants organiques incluent le glucose, des gommes, colles, bitumes, cires, de l'amidon et de préférence de la lignine, sous une forme liquide et notamment en solution aqueuse diluée.

EP-A-201 199 préconise de combiner la masse usée pulvérulente à de l'eau, d'effectuer une granulation, et de recouvrir les granulats avec une poudre inerte inorganique. De 5 à 50 % d'eau en poids (par rapport au mélange masse usée + eau) sont employés, pour convertir le silicium en dioxyde de silicium (ce qui permet de désactiver le silicium).

Les procédés de l'art antérieur visent donc avant tout la désactivation, sans se préoccuper véritablement de valorisation. Ils conduisent à des produits comportant des teneurs en eau peu compatibles avec leur transport, leur manipulation et leur valorisation, par exemple dans les industries métallurgiques.

La présente invention a donc pour objectif de proposer un nouveau procédé de traitement des masses usées et/ou des fines issues de la synthèse directe, permettant une désactivation performante de ces masses usées et/ou de ces fines, et l'obtention d'un produit solide stable, transportable, manipulable, et pouvant être notamment directement soumis à des opérations de valorisation, en particulier valorisation de métaux tels que silicium et cuivre par l'industrie métallurgique.

Un autre objectif de l'invention est de fournir un tel procédé qui puisse être réalisé au moindre coût et notamment avec un nombre minimum d'étapes.

La présente invention a donc pour objet un procédé d'agglomération de la masse usée pulvérulente et/ou des fines pulvérulentes issues de la production d'organohalosilanes, comprenant :
(i) le mélange de cette masse usée et/ou des fines avec un liant choisi parmi les polyholosides;
(ii) l'addition à ce mélange d'une quantité d'eau allant de 3 à 10%, de préférence de 4 à 8 % en poids par rapport à l'ensemble masse usée et/ou fines + liant ;
(iii) l'agitation du mélange solide obtenu sous (ii), pour l'obtention d'un mélange homogène ; et
(iv) la production d'un produit aggloméré solide par compression dans une presse.

Ce procédé permet, avec un ajout d'eau réduit, la production d'un produit non pulvérulent, se présentant sous forme d'agglomérats solides, durs, rigides, de forme définie.

Les expressions masse usée et fines résiduelles ont les significations usuelles. On peut préciser qu'il s'agit des matières usées et des fines issues de la synthèse directe, comprenant donc essentiellement du silicium métal et éventuellement des oxydes de silicium et de faibles quantités d'autres matériaux tels que chlore, hydrogène, oxygène, cuivre, carbone, fer, aluminium, zinc, calcium, étain, titane, manganèse, etc.

Parmi les polyholosides préférés, on peut citer les amidons et les dextrines, la préférence allant aux amidons et en particulier à l'amidon de blé ou à l'amidon de maïs. L'emploi de mélanges de différents polyholosides, amidons et/ou dextrines, par exemple mélanges d'amidons de blé et de maïs, entre aussi dans le cadre de l'invention.

Le rapport liant/masse usée peut aller notamment de 0,1/1 à 0,5/1, et se situe de préférence entre 0,15/1 et 0,3/1, en poids. Il convient de noter que dans l'ensemble de la description et des revendications et sauf mention contraire, lorsqu'il est question d'intervalles de valeurs, les bornes sont incluses.

La presse présente avantageusement des moyens destinés à conférer une forme définie au produit aggloméré, par moulage par compression. On peut utiliser tout type de presse de compression (du type utilisé pour le moulage ou l'agglomération par compression dans une forme, cavité ou moule), tel que presse à piston et presse à roues tangentes. Les presses utilisées comportent donc des cavités, formes ou moules dans lesquels le produit est aggloméré par compression et qui confèrent au produit aggloméré sa forme finale.

Dans la présente invention, on préférera des formes de galet, briquette ou pastille, des formes géométriques simples circulaires ou semi-circulaires, cylindriques ou semi-cylindriques ou similaires.

Les presses à roues tangentes («roll type briquet machine ») constituent un mode de mise en oeuvre préféré. Elles comprennent deux rouleaux placés au regard l'un de l'autre (axes parallèles) dont l'un au moins est agencé de manière à pouvoir être entraîné en rotation et l'un au moins comporte des cavités de forme définie. Le plus souvent, les deux rouleaux peuvent être entraînés en rotation et en particulier dans des directions opposées. Une pression peut être exercée entre les deux rouleaux et ce de façon réglable. L'un des rouleaux peut être fixe en position sur son axe, et l'autre rouleau peut être amené en pression contre le précédent à l'aide de moyens appropriés, en particulier par des moyens hydrauliques tels que des pistons ou vérins. Il est également possible que les deux rouleaux soient déplaçables l'un vers l'autre pour assurer la pression souhaitée, par l'utilisation par exemple de moyens hydrauliques comme déjà mentionnés. La presse à roues tangentes applique donc une pression, de préférence réglable, sur le matériau qui passe entre les rouleaux, lequel matériau se trouve moulé dans les cavités de forme définies qui sont prévues à la surface de l'un au moins de ces rouleaux. De préférence, les deux rouleaux présentent des cavités de formes complémentaires. On peut donner au matériau moulé-pressé final toute forme voulue en choisissant la forme des cavités présentées par le ou les rouleaux.

Afin d'obtenir une bonne agglomération, il est possible d'ajuster la pression appliquée dans la presse. Typiquement pour une presse à roues tangentes, la pression peut être réglée entre 10 et 80 kN/cm de largeur de roue (rouleau).

Le passage dans le mélangeur et dans la presse s'accompagne d'une élévation de température, qui avantageusement est maintenue au besoin entre 40 et 100°C, de préférence entre 45 et 70°C.

A titre illustratif, on pourra produire des agglomérats ayant un volume unitaire pouvant varier entre 0,5 et 20 cm³. il va de soi que ces valeurs sont données uniquement à titre illustratif.

Des presses à roues tangentes sont conçues et fabriquées par des sociétés telles que Sahut-Conreur à Raismes, France et K.R. Komarek Inc. à Elk Grove Village, Illinois, USA.

Les étapes (i), (ii) et (iii) sont de préférences réalisées dans le même mélangeur ou homogénéiseur. Il peut s'agir de tout type de mélangeur à solides. La durée de mélange aux étapes (i) et (ii) peut être de l'ordre de quelques minutes. A l'étape (ii), l'apport d'eau peut être réalisé de toute manière connue en soi, par exemple par simple coulée ou encore par aspersion ou pulvérisation sur le mélange de l'étape (i). L'homogénéisation se produit facilement malgré la quantité d'eau apportée réduite.

Les presses à roues tangentes sont généralement alimentées par un dispositif d'alimentation destiné à pousser le matériau entre les rouleaux. Il peut s'agir notamment d'un dispositif à vis ou analogue, e.g. placé verticalement au-dessus des surfaces en regard des deux rouleaux. Suivant une caractéristique optionnelle, le mélange issu du mélangeur passe dans ce dispositif d'alimentation, puis dans la presse.

Les agglomérats obtenus selon le procédé de l'invention ne sont pas auto-échauffants, ni réactifs à l'eau. Ils peuvent donc être manipulés et transportés sans que des mesures particulières dictées par une réglementation officielle ne soient requises.

Ces agglomérats peuvent également être utilisés comme matière première en vue de la valorisation du silicium métal et d'autres métaux tels que le cuivre. Ils peuvent notamment être utilisés dans des activités telles que la métallurgie du silicium, la métallurgie du cuivre, la métallurgie du fer et la fonderie. Les agglomérats peuvent être également utilisés dans la fabrication de céramiques, de composés réfractaires, etc.

Les produits agglomérés solides obtenus ou susceptibles d'être obtenus par la mise en oeuvre du procédé selon l'invention sont aussi des objets de la présente invention.

La présente invention a également pour objet un produit aggloméré comprenant de la masse usée et/ou des fines issue(s) de la synthèse directe, un liant choisi parmi les polyholosides, selon un rapport liant/masse usée compris entre 0,1/1 et 0,5/1, de préférence entre 0,15/1 et 0,3/1, en poids, et de 3 à 10%, de préférence de 4 à 8 % d'eau en poids par rapport à l'ensemble masse usée + liant. Cet agglomérat se présente sous la forme d'un produit solide et rigide, par exemple moulé, par exemple sous forme de galets, briquettes ou pastilles, de formes géométriques simples circulaires ou semi-circulaires, cylindriques ou semi-cylindriques ou similaires, e.g. de volume unitaire entre 0,5 et 20 cm³. Il s'agit en particulier d'un produit aggloméré tel qu'obtenu par la mise en oeuvre du procédé selon l'invention.

Dans cet agglomérat, le liant peut être plus particulièrement un amidon et/ou une dextrine, de préférence de l'amidon, et en particulier de l'amidon de blé et/ou de maïs.

La présente invention va être maintenant décrite à l'aide d'exemples décrivant des modes de réalisation de l'invention pris à titre d'exemples non limitatifs.

### Exemple 1

Dans un mélangeur-homogénéiseur à solide (appareil type mélangeur LODIGUE horizontal ou mélangeur à train valseur), on charge et mélange pendant quelques minutes
3000 grammes de masses usées en poudre et 1290 grammes d'amidon de blé en poudre soit 43 % du poids de masse usée. On ajoute ensuite 180 grammes d'eau soit 6 % du poids de masse usée, et on mélange pendant 5 minutes. On introduit enfin le mélange solide homogénéisé dans une presse à roues tangentes, alimentée par l'intermédiaire d'un dispositif d'alimentation à vis.
Vitesse de rotation du dispositif d'alimentation à vis: 18 tours/minute.
Caractéristiques de la presse à roues tangentes (Sahut Conreur type D150) :
Entrefer : 7/10 mm
Volume des alvéoles : 0,7 cm³
Vitesse de rotation des roues : 5 tours/minute.

Les agglomérats obtenus sont mesurés non auto-échauffants au test de BOWES CAMERON (échantillon soumis à une température d'enceinte égale à 140°C pendant 24 heures, selon les Recommandations relatives au Transport des Marchandises Dangereuses, Manuel d'épreuves et de critères, Troisième édition révisée, Nations Unies, New York et Genève, 1999) et ne réagissent pas au contact de l'eau.

### Exemple 2

Dans les mêmes conditions opératoires que pour l'exemple 1, pour 3000 grammes de masses usées, on charge 600 grammes d'amidon de blé en poudre soit 20 % du poids de masse usée et 180 grammes d'eau soit 6 % du poids de masse usée.

Les agglomérats obtenus sont mesurés non auto-échauffants au test de BOWES CAMERON (échantillon soumis à une température d'enceinte égale à 140°C pendant 24 heures) et ne réagissent pas au contact de l'eau.

### Exemple comparatif 3

Dans les mêmes conditions opératoires que pour l'exemple 1, pour 3000 grammes de masses usées, on charge 600 grammes d'amidon de blé en poudre soit 20 % du poids de masse usée. On procède comme précédemment, mais sans eau.

Résultat : défaut d'agglomération et caractère auto-échauffant.

### Exemple comparatif 4

Dans les mêmes conditions opératoires que pour l'exemple 1, pour 3000 grammes de masses usées, on charge 600 grammes d'amidon de blé en poudre soit 20 % du poids de masse usée et 750 grammes d'eau soit 25 % du poids de masse usée.

Résultat : produit aggloméré collant, ne se démoulant pas, collage sur les roues de la presse, mesure du caractère auto-échauffant impossible.

Il doit être bien compris que l'invention définie par les revendications annexées n'est pas limitée aux modes de réalisation particuliers indiqués dans la description ci-dessus.

## Revendications

1. - Procédé d'agglomération de la masse usée pulvérulente et/ou des fines pulvérulentes issues de la production d'organohalosilanes, comprenant :
(i) le mélange de cette masse usée et/ou des fines avec un liant choisi parmi les polyholosides;
(ii) l'addition à ce mélange d'une quantité d'eau allant de 3 à 10%, de préférence de 4 à 8 % en poids par rapport à l'ensemble masse usée + liant ;
(iii) l'agitation du mélange solide obtenu sous (ii), pour l'obtention d'un mélange homogène ; et
(iv) la production d'un produit aggloméré solide par compression dans une presse.

2. - Procédé selon la revendication 1, **caractérisé en ce que** le polyholoside est un amidon ou une dextrine, de préférence de l'amidon de blé ou de maïs.

3. - Procédé selon la revendication 1 ou 2, **caractérisé en ce que** le rapport liant/masse usée va de 0,1/1 à 0,5/1, de préférence de 0,15/1 à 0,3/1 en poids.

4. - Procédé selon l'une quelconque des revendications 1 à 3, **caractérisé en ce que** l'étape (iii) est conduite à l'aide d'une presse munie de moyens de moulage par compression, de préférence une presse à roues tangentes.

5. - Procédé selon l'une quelconque des revendications 1 à 4, **caractérisé en ce que** la température à l'étape (iv) atteint une valeur comprise entre 50 et 100°C, de préférence entre 45 et 70°C.

6. - Produit aggloméré solide susceptible d'être obtenu par la mise en oeuvre du procédé selon l'une quelconque des revendications 1 à 5.

7. - Produit aggloméré solide comprenant de la masse usée et/ou des fines résiduelles issue(s) de synthèse directe, un liant choisi parmi les polyholosides, selon un rapport liant/masse usée compris entre 0,1/1 et 0,5/1, de préférence entre 0,15/1 et 0,3/1, en poids, et de 3 à 10%, de préférence de 4 à 8 % d'eau en poids par rapport à l'ensemble masse usée + liant.

8. - Produit selon la revendication 7, **caractérisé en ce qu'**il comprend de l'amidon, de préférence de l'amidon de blé et/ou de l'amidon de maïs.

9. - Produit selon la revendication 7 ou 8, **caractérisé en ce qu'**il se présente sous la forme de produit moulé aggloméré, de préférence ayant un volume unitaire compris entre 0,5 et 20 cm³.

## Claims

1. - Process for agglomerating the pulverulent used material and/or the pulverulent fines resulting from the production of organohalosilanes, comprising:
(i) the mixing of this used material and/or fines with a binder chosen from polysaccharides;
(ii) the addition to this mixture of an amount of water ranging from 3 to 10%, preferably from 4 to 8%, by weight, with respect to the used material + binder combination;
(iii) the stirring of the solid mixture obtained in (ii), in order to obtain a homogeneous mixture; and
(iv) the production of a solid agglomerated product by compression in a press.

2. - Process according to Claim 1, **characterized in that** the polysaccharide is a starch or a dextrin, preferably wheat starch or maize starch.

3. - Process according to Claim 1 or 2, **characterized in that** the binder/used material ratio ranges from 0.1/1 to 0.5/1, preferably from 0.15/1 to 0.3/1, by weight.

4. - Process according to any one of Claims 1 to 3, **characterized in that** stage (iii) is carried out using a press equipped with means for molding by compression, preferably a roll type briquette machine.

5. - Process according to any one of Claims 1 to 4, **characterized in that** the temperature in stage (iv) reaches a value of between 50 and 100°C, preferably between 45 and 70°C.

6. - Solid agglomerated product capable of being obtained by the implementation of the process according to any one of Claims 1 to 5.

7. - Solid agglomerated product comprising used material and/or residual fines resulting from direct synthesis, a binder chosen from polysaccharides, according to a binder/used material ratio of between 0.1/1 and 0.5/1, preferably between 0.15/1 and 0.3/1, by weight, and from 3 to 10%, preferably from 4 to 8%, of water, by weight, with respect to the used material + binder combination.

8. - Product according to Claim 7, **characterized in that** it comprises starch, preferably wheat starch and/or maize starch.

9. - Product according to Claim 7 or 8, **characterized in that** it exists in the form of an agglomerated molded product preferably having a unit volume of between 0.5 and 20 cm³ .

## Patentansprüche

1. Verfahren zur Agglomerierung von gebrauchtem pulverförmigen Material und/oder von pulverförmigen Feinanteilen aus der Produktion von Organohalosilanen, umfassend
(i) das Vermischen dieses gebrauchten Materials und/oder der Feinanteile mit einem Bindemittel, ausgewählt unter den Polyholosiden (Polysacchariden);
(ii) die Zugabe zu dieser Mischung von einer Menge Wasser, die von 3 bis 10 Gew.-%, vorzugsweise von 4 bis 8 Gew.-% reicht, bezogen auf die Gesamtheit von gebrauchtem Material + Bindemittel;
(iii) das Verrühren der unter (ii) erhaltenen festen Mischung, um eine homogene Mischung zu erhalten; und
(iv) die Herstellung eines festen agglomerierten Produktes durch Verdichten in einer Presse.

2. Verfahren nach Anspruch 1, **dadurch gekennzeichnet, dass** das Polyholosid eine Stärke oder ein Dextrin ist, vorzugsweise die Stärke von Weizen oder Mais.

3. Verfahren nach Anspruch 1 oder 2, **dadurch gekennzeichnet, dass** das Verhältnis Bindemittel/gebrauchtes Material von 0,1/1 bis 0,5/1, vorzugsweise von 0,15/1 bis 0,3/1 in Gewicht reicht.

4. Verfahren nach irgendeinem der Ansprüche 1 bis 3, **dadurch gekennzeichnet, dass** die Stufe (iii) mit Hilfe einer Presse durchgeführt wird, ausgestattet mit Mitteln zum Kompressionsformen, vorzugsweise einer Presse mit Tangentenrädern.

5. Verfahren nach irgendeinem der Ansprüche 1 bis 4, **dadurch gekennzeichnet, dass** die Temperatur der Stufe (iv) einen Wert zwischen 50 °C und 100 °C erreicht, vorzugsweise zwischen 45 °C und 70 °C.

6. Festes agglomeriertes Produkt, das geeignet ist, mit Hilfe der Durchführung des Verfahrens nach irgendeinem der Ansprüche 1 bis 5 erhalten zu werden.

7. Festes agglomeriertes Produkt, umfassend gebrauchtes Material und/oder restliche Feinanteile aus der direkten Synthese, ein Bindemittel, ausgewählt unter den Polyholosiden, gemäß einem Verhältnis Bindemittel/gebrauchtes Material zwischen 0,1/1 und 0,5/1, vorzugsweise zwischen 0,15/1 und 0,3/1 in Gewicht, und 3 bis 10 Gew.-%, vorzugsweise 4 bis 8 Gew.-% Wasser, bezogen auf die Gesamtheit gebrauchtes Material + Bindemittel.

8. Produkt nach Anspruch 7, **dadurch gekennzeichnet, dass** es Stärke umfasst, vorzugsweise Weizenstärke und/oder Maisstärke.

9. Produkt nach Anspruch 7 oder 8, **dadurch gekennzeichnet, dass** es in Form von agglomeriertem formgegossenen Produkt vorliegt, vorzugsweise mit einem Einheitsvolumen zwischen einschließlich 0,5 und 20 cm³ .
